# EUROPÄISCHE PATENTANMELDUNG

(11) **EP 2 682 292 A2**
(43) Veröffentlichungstag der Anmeldung: **08.01.2014**
(21) Anmeldenummer: 13171195.4
(22) Anmeldetag: 10.06.2013
(51) Int. Cl.: B60J 1/00

(54) **Scheibenbefestigung**

(30) Priorität: 06.07.2012 DE 102012013340
(71) Anmelder: Decoma (Germany) GmbH, 66280 Sulzbach / Saar (DE)
(72) Erfinder: Salzmann, Heiner, 73066 Uhingen (DE)
(74) Vertreter: Rausch, Gabriele

(57) **Zusammenfassung**

Beschrieben wird eine Scheibenbefestigung zur Befestigung und/oder Abdichtung einer Scheibe an einem Karosserieteil oder sonstigen Teil eines Kraftfahrzeuges, bestehend aus einem ersten, an der Scheibe (S) angebrachten Trägerelement (TP1), einem zweiten, an dem Karosserieteil (KT) angebrachten Trägerelement (TP2), wobei erstes und zweites Trägerelement (TP1, TP2) Nuten und in die Nuten eintauchende Rippen aufweisen sowie einer Weichkomponente (WK) zwischen dem ersten und dem zweiten Trägerelement (TP1, TP2), über welches die Fixierung und/oder Abdichtung der Bauteile zueinander und somit der Scheibe (S) an bzw. gegenüber dem Karosserieteil (KT) erfolgt.

## Beschreibung

Die Erfindung betrifft eine Scheibenbefestigung zur Befestigung und/oder Abdichtung einer Scheibe an einem Karosserieteil oder sonstigen Teil eines Kraftfahrzeugs nach der Art von Anspruch 1.

Um bei einem Kraftfahrzeug eine Scheibe an einem Karosserieteil zu befestigen und abzudichten, ist es bekannt, die Scheibenkante mit einem Kunststoff zu umspritzen und die so umspritzte Kante in einem Formteil einzufassen. Eine derartige Lösung zeigt die FR 2 858 950 B1.

Eine Befestigung, Einfassung einer Scheibe mittels Hartkunststoff schlägt die EP 0 857 116 B1 vor, wobei diese Art der Scheibenbefestigung die Scheibe an ihrem Außenumfang vollständig umlaufend umfasst. Diese Scheibenumfassung aus Hartkunststoff weist ferner auch Befestigungselemente zur Anbringung an einem Karosserieteil auf. Zusätzlich ist eine Umspritzung mit einem weicheren Kunststoff vorgesehen. Diese Umspritzung dient der dichtenden Anlage gegenüber einem Karosserieteil.

Die EP 1 621 384 B1 beschreibt eine Heckklappenkonstruktion für ein Kraftfahrzeug, bestehend aus einem Metallrahmen, einem Außenverkleidungsteil, einem Innenteil sowie einer rahmenlosen Scheibe. Die Scheibe kann mittels eines Steckflansches oder auch durch Verklebung am Rahmen befestigt sein. Eine flächige Verklebung der Scheibe über ihren Randbereich ermöglicht aber die Bildung von Spannungen im Glas, da es an einem entsprechenden Ausgleich fehlt, wenn nicht eine entsprechend hohe Klebstoffmenge verwendet wird.

Nachteilig bei einer Scheibenverklebung ist, dass die Scheibe beim Aufsetzen auf das entsprechende Bauteil positioniert werden muss. Ferner muss die Scheibe bis zum vollständigen Aushärten des Klebemittels fixiert werden. Eine derartige Scheibenbefestigung ist somit auch mit Blick auf den Herstellungsprozess nachteilig.

Die FR1388582 A zeigt eine Scheibenbefestigung zur Befestigung und oder Abdichtung einer Scheibe an einem Karosserieteil oder sonstigen Teil eines Fahrzeugs. Als Verbindung zwischen den beiden Teilen dienen Trägerelemente an den beiden Bauteilen, die durch Anclipsen befestigt sind. Die Trägerbauteile umfassen dabei die Scheibe und die sonstigen Teile des Fahrzeugs. Die Trägerbauteile sind nicht angespritzt und werden in Form von Schnapphaken ineinandergesteckt verbunden.

Die US 5711119A zeigt eine Verbindung zwischen einer Scheibe und dem Scheibenrahmen, dabei wird auf die Scheibe eine Verbindungsschicht 3 aufgebracht, auf die ein profilierter Rahmen 4 aus Elastomer auf gespritzt wird. Der angespritzte Rahmen weist dabei ein U förmiges Profil zur Aufnahme eines Schnapphakens 13 auf.

Die Verwendung von Schnappverbindungen lassen keine einfache Montage zu, die Positionierung der Bauteile gegeneinander muss bei der Montage präzise sein.

Die Aufgabe der vorliegenden Erfindung besteht darin, eine Scheibenbefestigung in gegenüber den bekannten Ausführungen verbesserter Form zu schaffen.

Diese Aufgabe wird gelöst durch die Merkmale von Anspruch 1. Weiterbildungen ergeben sich aus den Unteransprüchen.

Gemäß der Erfindung ist eine Scheibenbefestigung zur Befestigung und/oder Abdichtung einer Scheibe an einem Karosserieteil oder sonstigen Teil eines Kraftfahrzeuges vorgesehen, bestehend aus einem ersten, an der Scheibe angebrachten Trägerelement, einem zweiten, an dem Karosserieteil angebrachten Trägerelement, wobei erstes und zweites Trägerelement Nuten und in die Nuten eintauchende Rippen aufweisen sowie einer Weichkomponente zwischen dem ersten und dem zweiten Trägerelement, über welches die Fixierung und/oder Abdichtung der Bauteile zueinander und somit der Scheibe an bzw. gegenüber dem Karosserieteil erfolgt.

Die Erfindung sieht somit eine Befestigung und/oder Abdichtung der Scheibe unter Verwendung von zwei Hälften einer Labyrinthdichtung vor, wobei die erste Hälfte dieser Dichtung, das erste Trägerelement bildend, an der Scheibe angebracht ist, die zweite Hälfte der Labyrinthdichtung durch das zweite Trägerelement an der Karosserie, dem Karosserieteil gebildet wird. Durch eine vorzugsweise als Thermoplast gebildete Weichkomponente zwischen den beiden Trägerelementen erfolgt die Abdichtung und/oder Fixierung der Scheibe, wobei die Bemaßung der Struktur des ersten und des zweiten Trägerelementes derartig ist, dass erstes und zweites Trägerelement nicht direkt in Kontakt kommen, also ein Ausgleich möglich ist. Die Labyrinthdichtung nebst Weichkomponente zwischen Scheibe und Karosserieteil sorgt so zumindest für die Dichtfunktion und kann auch zusätzlich die Befestigung der Scheibe bewirken.

Gemäß einer Ausführungsform der Erfindung ist vorgesehen, dass das erste Trägerelement, die erste Hälfte der Labyrinthdichtung aus einem direkt an der Scheibe angespritzten Thermoplast entsprechender Härte besteht bzw. als ein bereits an der Scheibe geformter Bereich ausgebildet ist. Das zweite Trägerelement, die zweite Hälfte der Labyrinthdichtung kann aus dem gleichen oder einem entsprechend angepassten Material gefertigt sein. Insbesondere kann dieses Element ebenfalls an dem Karosserieteil angespritzt sein. Auch ist es möglich, dass das zweite Trägerelement als ein vorgefertigtes Profilteil, hergestellt bspw. als ein Stranggußprofil, auf das Teil, auf welchem die Scheibe zu befestigen ist, aufgeklebt wird.

Die Weichkomponente, welche den Raum der Labyrinthdichtung zwischen dem ersten und dem zweiten Trägerelement ausfüllt, ist als ein Thermoplast entsprechend geringer Härte ausgebildet. Die Weichheit des Materials sorgt für die Fixierung und den entsprechenden Toleranzausgleich der Scheibe gegenüber dem Bauteil, d.h. sowohl thermische als auch mechanisch bedingte Arbeit der Scheibe in ihrer Ebene kann ausgeglichen werden, ohne dass sich Spannungen aufbauen. Ferner ist auch die Bemaßung der Trägerelemente, also insbesondere der durch die Hälften der Labyrinthdichtung gebildeten Bauteile zueinander so gewählt, dass die dazwischen befindliche Weichkomponente genügend Raum findet, um entsprechende Bewegungen zueinander zuzulassen. Letztlich richtet sich die Bemaßung der Trägerelemente auch nach der zu realisierenden Festigkeit.

Der Vorteil der erfindungsgemäßen Scheibenbefestigung liegt darin, dass mit dem Aufsetzen der Scheibe gleichzeitig eine Lagefixierung gegeben ist. Die Weichkomponente, welche vor dem Zusammenbau in die Fugen eines der Trägerelemente eingefüllt, eingelassen ist, bewirkt direkt nach dem Aufsetzen der Scheibe eine Fixierung. Auch ist es möglich, die Weichkomponente als ein vorgefertigtes, separates Bauteil vorzusehen, d.h. dieses Bauteil wird dann - vor dem Montieren der Scheibe - in eines der Trägerelemente eingesetzt.

Das Zusammensetzen der beiden kongruent zueinander gestalteten Trägerelemente, je eine Hälfte einer Labyrinthdichtung bildend, mit der dazwischen befindlichen Weichkomponente erzeugt durch den Zusammenbau eine Klemmkraft. Die Stege der hart ausgeführten Trägerelemente sowie die dazwischen befindliche Weichkomponente ergeben eine durch elastische Verformung bewirkte Klemmverbindung.

Weiterhin kann ein vor der Montage an einem der Trägerelemente oder der Scheibe oder dem Karosseriebauteil angebrachtes Distanzelement, ein Spacer vorgesehen sein. Dieses bspw. als Profil gestaltetes Bauteil sorgt dafür, dass die beiden Trägerelemente, die Hälften der Labyrinthdichtung, bis auf ein vorgegebenes und durch die Dicke des Distanzelement bestimmtes Maß zusammengefügt werden können.

Des Weiteren erfolgt die Erläuterung von Ausführungsbeispielen der Erfindung an Hand der Zeichnungen.

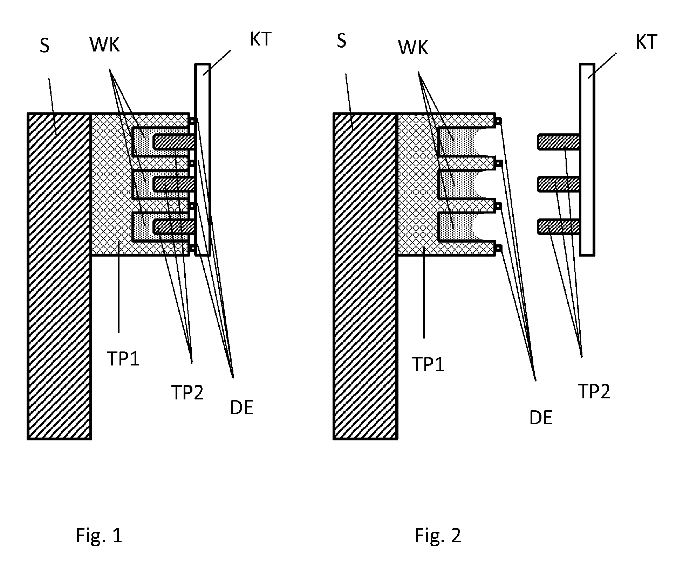

Figur 1 zeigt den Rand einer Scheibe S, wobei entlang des Randes ein kammförmig gestaltetes Profil eines ersten Trägerelementes TP1 aus Thermoplast angespritzt ist. Dieses erste Trägerelement TP1 weist drei parallel zueinander verlaufende Nuten mit rechteckigem Querschnitt auf, wobei diese Nuten senkrecht gegenüber der Scheibenebene orientiert sind. An einem Karosserieteil KT ist ein zweites Trägerelement TP2 angebracht, bestehend aus parallel zueinander verlaufenden Rippen, welche in die entsprechenden Nuten des ersten Trägerelementes TP1 eingreifen, ohne dass sich die entsprechenden Teile berühren. Die durch die Stege des ersten Trägerelementes gebildeten Nuten sowie die Rippen des zweiten Trägerelements TP2 bilden eine Labyrintdichtung.

Der Raum zwischen den Nuten des ersten Trägerelementes TP1 und den Rippen des zweiten Trägerelementes TP2 ist mit einem Thermoplasten als Weichkomponente WK gefüllt. Zur Regulation der Eindringtiefe der Rippen des zweiten Trägerelementes TP2 in die Nuten des ersten Trägerelementes TP1 ist zwischen der Scheibe S und dem Karosserieteil KT ein Distanzelement DE angeordnet. Im gezeigten Ausführungsbeispiel ist das Distanzelement DE gebildet durch insgesamt vier zwischen den Stirnseiten der die Nuten einrahmenden Stege des ersten Trägerelementes TP1 und dem Karosserieteil KT angeordneten Profile.

Figur 2 zeigt die erfindungsgemäße Scheibenbefestigung vor dem Zusammenbau. In die durch die Stege des ersten Trägerelementes PT1 gebildeten Nuten ist die thermoplastische Weichkomponente WK eingefüllt, welche nach dem Zusammenbau - wie in Figur 1 gezeigt - durch plastische Verformung den ganzen Raum zwischen Nut und eingreifenden Steg des zweiten Trägerelementes TP2 ausfüllt. Das bzw. die Distanzelemente DE sind auf den Stirnseiten der die Nuten einrahmenden Stege des ersten Trägerelementes TP1 angebracht, bspw. aufgeklebt.

### Bezugszeichenliste

- S: Scheibe
- TP1: erstes Trägerelement
- TP2: zweites Trägerelement
- KT: Karosserieteil
- WK: Weichkomponente
- DE: Distanzelement

## Patentansprüche

1. Scheibenbefestigung zur Befestigung und/oder Abdichtung einer Scheibe (S) an einem Karosserieteil oder sonstigen Teil eines Kraftfahrzeuges, bestehend aus einem ersten, an der Scheibe (S) angebrachten Trägerelement (TP1), einem zweiten, an dem Karosserieteil (KT) angebrachten Trägerelement (TP2), und das erste bzw. das zweite Trägerelement (TP1, TP2) ein an der Scheibe (S) bzw. dem Karosserieteil (KT) angespritztes Bauteil bzw. ein Bestandteil der Scheibe sind, **dadurch gekennzeichnet dass** das erste und zweite Trägerelement (TP1, TP2) Nuten und in die Nuten eintauchende Rippen aufweisen sowie einer Weichkomponente (WK) zwischen dem ersten und dem zweiten Trägerelement (TP1, TP2), über welches die Befestigung und/oder Abdichtung der Bauteile zueinander und somit der Scheibe (S) an bzw. gegenüber dem Karosserieteil (KT) erfolgt.

2. Scheibenbefestigung nach Anspruch 1, **dadurch gekennzeichnet, dass** das erste und zweite Trägerelement (TP1, TP2) die Hälften einer Labyrinthdichtung bilden.

3. Scheibenbefestigung nach Anspruch 1 oder 2, **dadurch gekennzeichnet, dass** das erste und/oder das zweite Trägerelement (TP1, TP2) aus einem harten Thermoplasten gebildet sind.

4. Scheibenbefestigung nach einem der vorhergehenden Ansprüche, **dadurch gekennzeichnet, dass** die zwischen dem ersten und dem zweiten Trägerelement (TP1, TP2) angeordnete Weichkomponente (WK) ein Thermoplast ist.

5. Scheibenbefestigung nach einem der vorhergehenden Ansprüche, **dadurch gekennzeichnet, dass** ein Distanzelement (DE) zwischen dem ersten und dem zweiten Trägerelement (TP1, TP2) bzw. einem der Trägerelemente (TP1, TP2) und der Scheibe (S) bzw. dem Karosserieteil (KT) angeordnet ist, durch welches die Eindringtiefe der Rippen in die Nuten bestimmt wird.
